(19) Europäisches Patentamt
European Patent Office
Office européen des brevets

(11) EP 1 382 643 A1

(12) EUROPEAN PATENT APPLICATION

(43) Date of publication:
**21.01.2004 Bulletin 2004/04**

(51) Int Cl.⁷: **C08L 77/12**, C09D 177/12

(21) Application number: **02077301.6**

(22) Date of filing: **07.06.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **DSM IP Assets B.V.**
**6411 TE Heerlen (NL)**

(72) Inventors:
- **Stanssens, Dirk Armand Wim**
**3530 Houthalen (BE)**
- **Muscat, Dirk**
**6171 TN Stein (NL)**
- **Dorschu, Marko**
**6191 CH Beek (NL)**

(74) Representative: **Mooij, Johannes Jacobus et al**
**DSM Patents & Trademarks**
**Office Geleen**
**P.O. Box 9**
**6160 MA Geleen (NL)**

# (54) Polyesteramide barrier film layer and its use

(57) The invention relates to a barrier film layer comprising a polymer composition, wherein the polymer composition comprises

a. an amount of a highly branched polyesteramide (HBPEA), and
b. optionally, an amount of polyvinylalcohol or a derivative thereof (P(E)VA),

wherein the sum of the amount of the HBPEA and the amount of the P(E)VA is at least 30 weight %, calculated relative to the weight of the polymer composition, and wherein the amount of the HBPEA is at least 5 weight %, calculated relative to the weight of the polymer composition, and wherein the polymer composition comprises hydroxyl and/or carboxyl functional groups with a combined hydroxyl and carboxyl value of at least 20 mg KOH/g calculated relative to the polymer composition.

The effect of the barrier film according to the invention is that it can be used to enhance the oxygen barrier properties of polymeric substrates, that it does not generate hydrogen chloride gas when incinerated, that it can be used in applications requiring non-invasive control on metal content and that it has improved adhesion on apolar substrates compared to barrier film layers based on a completely hydrolyzed PVA alone. A further advantage of the barrier film layer according to the invention is an improved printability.

The invention also relates to a coating composition comprising a polymer composition as described for the barrier film layer. The invention also relates to use of the coating composition for the preparation of a barrier film layer, to a substrate bearing a barrier film layer according to the invention and to an article comprising a substrate according to the invention.

EP 1 382 643 A1

## Description

The present invention relates to a barrier film layer comprising a polymer composition, in particular a barrier film layer that can be used as an oxygen-barrier on a polymeric substrate. Such a barrier film layer can impart oxygen barrier properties to the plastic material or can help to reduce the exposure of the plastic material to oxygen.

Plastic materials such as polymeric films have been widely used for packaging various food and non-food products. In order to insure proper preservation of products packaged in such polymeric films, it is necessary to provide the films with barriers against transmission of air, moisture, gas, deleterious flavors, etc. No single unmodified polymeric film, however, has sufficient gas and moisture barrier characteristics needed for proper packaging requirements. For example, polyolefin films such as polypropylene films are particularly preferred in the manufacture of packaging films due to their low cost and ease of manufacture. Such polypropylene films, however, inherently permit the transmission of oxygen and water vapor from the atmosphere into the inside of a package made up of the film. When such films are used as food packaging, oxygen and water vapor transmitted there through promote rapid deterioration of foods packaged therein. Polymeric films with a barrier film layer can be used for instance in multi-layer packaging films, which are particularly useful as packaging films for food products.

An interesting new and challenging application of barrier film layers is in the field of flexible displays for LED systems. The mayor challenge lies in the replacement of classical stiff silicate glass based screens by flexible polymer based screens, in particular where good barrier properties are required to protect oxygen and moisture sensitive LED systems.

Various types of oxygen gas barrier films and of wrapping materials containing oxygen gas barrier films are known. Aluminum (Al) foil has perfect oxygen gas barrier properties, but when used by itself, it often has pinholes. Therefore, Al foil is used as the interlayer of laminate films. However, packages made from films containing an Al foil layer cannot be used in applications in which it is desirable to use metal detectors to identify metal contamination of the contents. Furthermore, films containing an Al foil layer generate Al residues after incineration. Additionally, since laminate films containing an Al foil layer are not transparent, it is difficult to see the contents of packages made with such films or images displayed in an electronic display.

Other known oxygen gas barrier films are polyvinylidene chloride (PVDC) films and PVDC-coated films. PVDC absorbs little moisture and exhibits good gas barrier properties even in high-humidity conditions, and is therefore used for coating various substrates. The substrates to be coated with PVDC include films of, for example, biaxially-oriented polypropylene (OPP), biaxially-oriented nylon (ON), biaxially-oriented polyethylene terephthalate (OPET), and cellophane, etc. However, PVDC tends to degrade rapidly under typical film reprocessing temperatures, resulting in poor quality recycle products and PVDC-laminated films are also problematic in that they generate hydrogen chloride gas when incinerated as waste.

Nearly completely to completely hydrolyzed, modified and non-modified polyvinyl alcohol film layers are also known as oxygen gas barrier films. According to US-6,303,199, polyvinylalcohol (PVA) films exhibit excellent oxygen gas barrier properties under low-humidity conditions. In general, however, they absorb moisture, and their oxygen gas barrier properties are greatly degraded in high-humidity conditions in which the relative humidity is around 70% or higher. Instead of PVA also derivatives of PVA can be used. A polyvinylalcohol derivative is in this context understood to be a polymer, obtainable from a polyvinylacetate or copolymer of vinylacteate and $\alpha$-olefin monomers by partial or complete hydrolysis. The polyvinyl alcohol may optionally be modified with hydrophobic groups, for example with ester groups derivable from aliphatic carboxylic acids. Polyvinylalcohol and derivatives thereof are further herein denoted as P(E)VA.

Another problem is that adhesion of PVA to apolar substrates, such as OPP or OPET substrate films, is poor. According US-6,303,199, the viscosity of aqueous solutions of PVA having a degree of polymerization of higher than 2000 is too high, giving the solution poor coating properties. If the degree of polymerization is lower than 100, the strength of the resulting PVA coating is low and pinholes are often formed.

Therefore, a need exists for a barrier film layer, which is capable of providing oxygen barrier properties to the substrate, and which barrier film layer does not have the disadvantages of aluminum, PVDC or PVA barrier films or in a lesser extent.

The aim of the present invention is to provide a barrier film layer comprising a polymer composition, which barrier film layer is free of metal and halogens and has improved adhesion to apolar substrates compared to completely hydrolyzed polyvinylacetate.

This aim is achieved with a barrier film layer wherein the polymer composition comprises

a. an amount of a highly branched polyesteramide (HBPEA), and
b. optionally, an amount of polyvinylalcohol or a derivative thereof (P(E)VA),

wherein the sum of the amount of the HBPEA and the amount of the P(E)VA is at least 30 weight %, calculated relative

to the weight of the polymer composition, and wherein the amount of the HBPEA is at least 5 weight %, calculated relative to the weight of the polymer composition, and wherein the polymer composition comprises hydroxyl and/or carboxyl functional groups with a combined hydroxyl and carboxyl value of at least 20 mg KOH/g calculated relative to the polymer composition.

The effect of the barrier film according to the invention is that it can be used to enhance the oxygen barrier properties of polymeric substrates, that it does not generate hydrogen chloride gas when incinerated, that it can be used in applications requiring non-invasive control on metal content and that it has improved adhesion on apolar substrates compared to barrier film layers based on a completely hydrolyzed PVA alone. A further advantage of the barrier film layer according to the invention is an improved printability.

With the combined hydroxyl and carboxyl value is in the context of the application understood the sum of a hydroxyl content and a carboxyl content, both in meq/g polymer composition, multiplied by the molecular weight of potassium hydroxide (KOH, Mw 56), and expressed in mg KOH/g. The carboxyl value of a polymer composition is defined according the method described in ISO 3682. The hydroxyl value of a polymer composition is defined according the method described in ISO 4629. If a polymer composition comprises both carboxyl functional groups and hydroxyl functional groups, the hydroxyl value obtained by ISO 4629 has to be corrected for the carboxyl value obtained by the method of ISO 3682. Thus, the empirical value for the combined hydroxyl and carboxyl value is calculated from the sum of the result of the method according to ISO 4629 plus 2 times the result of the method according to ISO 3682.

A highly branched polyester amide (HBPEA) is understood to be a linear or branched condensation polymer containing ester groups and at least an amide group in the backbone and having a number average molar mass of at least 600 g/mol. Typically, the HBPEA is a polyesteramide obtainable from the polymerization of type $A\text{-}B_x$ monomers comprising an amide group, wherein x is an integer representing the number of functional groups B per molecule $A\text{-}B_x$, A is a carboxyl acid functional group and B is a hydroxyl functional group or A is a hydroxyl functional group and B is a carboxyl acid functional group. Typical values for x range from 1 to 4. Typically, the average value of x is at least 1,5. Optionally the HBPEA is modified with a coreactant of type R-By, wherein y is the number of functional groups B per molecule R-By, being an integer with values from 2 to 4 and B is a functional group of the same type as the functional group B in the $A\text{-}B_x$ type monomer and R is an organic substituent. Also optionally, the highly branched polyesteramide is modified with a coreactant of the type $R^1$-X, wherein X is a functional group that can chemically react with a hydroxyl functional group and / or a carboxyl acid functional group and $R^1$ is an organic substituent.

The preparation of a HBPEA takes place in a known manner, as described in WO-A-99/16810, WO-A-00/58388 and WO-A-00/56804. These publications describe that a HBPEA is prepared by reacting a cyclic anhydride or a dicarboxylic acid with an alkanol amine, preferably a di(alkanol) amine, and optionally in combination with mono and/or trialkanolamine, mono-functional carboxylic acid, mono-functional alcohol and/or dialkylamine. Another method for the preparation of a HBPEA is by:

a) contacting a hydroxyl or amine functional monomer, oligomer or polymer with a first molar excess of a cyclic carboxylic anhydride, so that a mixture of an acid functional ester, respectively an acid functional amide, and cyclic carboxylic anhydride is formed.
b) contacting the mixture with an amount of alkanol amine, the amount being a second molar excess relative to the first molar excess.

Suitable dicarboxylic acids for the preparation of highly branched polyester amides are dicarboxy acids derived from $C_2$-$C_{24}$ (cyclo)alkyl, aryl or (cyclo)alkyl-aryl radicals. The dicarboxylic acids may be saturated or unsaturated. Examples of dicarboxylic acids are phthalic acid, tetrahydrophthalic acid, naphthalene dicarboxylic acid, hexahydrophthalic acid, succinic acid and glutaric acid. Preferably, the HBPEA in the barrier film according to the invention is based on a $C_6$-$C_{24}$ (cyclo)alkyl dicarboxy acid, more preferably a $C_{12}$-$C_{24}$ (cyclo)alkyl dicarboxy acid, since this gives a better adhesion to apolar substrates.

Suitable cyclic anhydrides are phthalic anhydride, tetrahydrophthalic anhydride, maleic anhydride, (methyl) succinic anhydride and glutaric anhydride.

The alkanol amines are preferably di(alkanol)amines, more preferably a di-β-alkanol amine. The advantage is a faster esterification during preparation. Examples are diisobutanol amine and diisopropanol amine.

Suitable mono-functional carboxylic acids are, for example, saturated aliphatic ($C_1$-$C_{26}$) acids, unsaturated ($C_1$-$C_{20}$) fatty acids, aromatic acids and α,β-unsaturated acids. Examples of suitable α,β-unsaturated acids are (meth) acrylic acid, crotonic acid and monoesters or monoamides of itaconic acid, maleic acid, and polyether carboxylic acid. Suitable saturated aliphatic acids are for example acetic acid, propionic acid, butyric acid, 2-ethyl hexanoic acid, laurylic acid and stearic acid. Suitable aromatic acids are, for example, benzoic acid and tertiary butyl benzoic acid.

Preferably, the HBPEA in the barrier film layer according to the invention is modified with long chain saturated aliphatic or unsaturated fatty acids, more preferably $C_{10}$-$C_{20}$ carboxylic acids. The advantage is that adhesion to apolar substrates is improved.

Preferably, the barrier film layer according to the invention comprises a HBPEA according to formula (1):

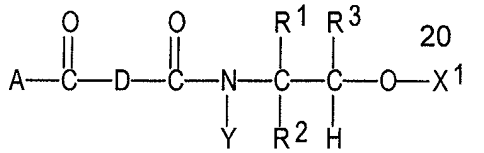 (1),

in which

Y = H, $(C_1-C_{20})$(cyclo)alkyl or $(C_6-C_{10})$aryl monoradical or

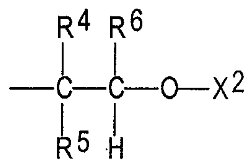

A= 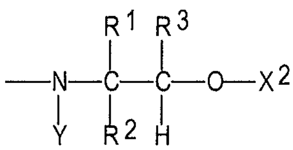 , 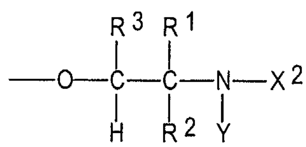 , 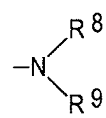 ,

or $-OR^7$

D = $(C_2-C_{24})$ (cyclo)alkyl, aryl or (cyclo)alkyl-aryl diradical, optionally substituted,

$X^1$ = 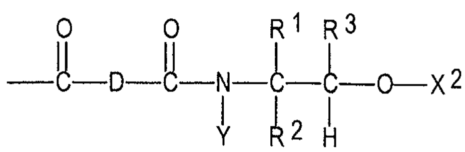 ,

wherein

$X^2$ = H,

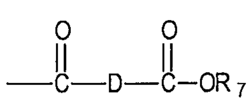 , 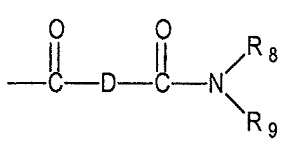 , 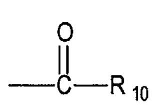 ,

or

$X^2$ is at least once $X^1$ and terminates with H,

5

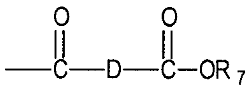 , 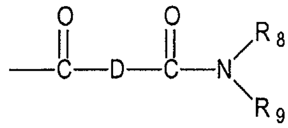 , or 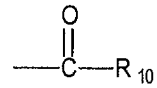

and

$R^1$, $R^2$, $R^3$, $R^4$, $R^5$ and $R^6$ may be H, ($C_6$-$C_{10}$) aryl or ($C_1$-$C_8$)(cyclo)alkyl radical, $OR^7$ is derived from a hydroxy-functional monomer, oligomer or polymer, wherein $R^7$ can be H, aryl, alkyl, cycloalkyl, or the radical of polyethyleneoxide, polypropylene-oxide, polytetrahydrofurane, or a nylon oligomer, -$NR^8R^9$ is derived from a amino-functional monomer wherein $R^8$ and $R^9$ may, independently of one another, be chosen from the group of optionally hetero-atom substituted ($C_6$-$C_{10}$) aryl groups, optionally hetero-atom substituted ($C_1$-$C_{28}$) alkyl groups, polyethers, polyesters and polyamides, and $C(O)R^{10}$ is derived from a monomeric, oligomeric or polymeric mono-functional carboxylic acid.

The number average molecular weight ($M_n$) of the HBPEA typically is between 600 and 50.000 g/mol. Preferably $M_n$ is at least 800 g/mol, more preferably at least 1200 g/mol, even more preferably at least 1500 g/mol, and most preferably at least 2000 g/mol. The advantage is that HBPEA with a high molecular weight forms a better film.

Typically the HBPEA in the barrier film layer according to the invention has a combined hydroxyl and carboxyl value between 20 and 600 mg KOH/g, relative to the weight of the HBPEA. With a combined hydroxyl and carboxyl value of at least 20 mg KOH/g, acceptable barrier properties are obtained. Preferably, the value is at least 50 mg KOH/g, more preferably at least 100 mg KOH/g and most preferably at least 200 mg KOH/g. The advantage is that the barrier film may comprise a lower HBPEA content, or that barrier film layer shows better barrier properties at equal HBPEA content.

In a preferred embodiment of the invention, the barrier film layer according to the invention comprises a polymer composition consisting of 50 to 95 weight % P(E)VA, 5-40 weight % HBPEA and 0-20 weight % other polymeric components, the weight % calculated relative the weight of the polymer composition. Suitably, the combined hydroxyl and carboxyl value lies between 600 and 1250 mg KOH/g. The advantage is that the barrier film has good barrier properties and can be prepared form lower viscous coating compositions having better processability and/or allowing faster running preparation processes and/or that P(E)VA with a higher degree of polymerisation can be used while still resulting in good coating properties.

More preferably, the polymer composition consists of 75-95 weight % P(E)VA , 5-20 weight % HBPEA and 0-10 weight % other polymeric components, and has a combined hydroxyl and carboxyl value between 800 and 1250 mg KOH/g. The advantage is that a barrier film layer having a high level of barrier properties and improved printing characteristics can be obtained, that P(E)VA with a higher degree of polymerisation can be used while still resulting in good coating properties, and the film has improved self-sustaining properties.

In another preferred embodiment of the invention, the polymer composition consists of 0-50 weight % P(E)VA, 50-100 weight % HBPEA and 0-25 weight % other polymeric components. The advantage is that the barrier film layer has good barrier properties, even with low P(E)VA content and that the film layer has good coating properties, even when obtained from low molecular weight HBPEA. Suitably, the polymer composition has a combined hydroxyl and carboxyl value between 20 and 900 mg KOH/g. The value has to be at least 20 mg KOH/g, to have acceptable barrier properties. More preferably the value is between 50 and 800 mg KOH/g, even more preferably between 100 and 700 mg KOH/g, most preferably between 200 and 600 mg KOH/g. With a higher minimum combined hydroxyl and carboxyl value the barrier film layer has better barrier properties and with a lower maximum combined hydroxyl and carboxyl value the barrier film layer has improved water resistance.

Also more preferably, the polymer composition consists of 0-25 weight % P(E)VA, 75-100 weight % HBPEA and 0-20 weight % other polymeric components, even more preferably 0-10 weight P(E)VA, 90-100 weight % HBPEA and 0-5 weight % other components. The advantage of a higher HBPEA content is that the printability of the barrier film layer is improved and that the layer can be prepared from a coating composition comprising less solvent or even no solvent at all.

Most preferably, the polymer composition consists of 1-10 weight % P(E)VA, 90-100 weight % HBPEA and 0-5% other polymeric components, and has a combined hydroxyl and carboxyl value between 200 and 600 mg KOH/gr. In this range a synergistic effect occurs. The advantage is that the barrier film layer has optimal oxygen barrier properties.

In a preferred embodiment of the invention, the barrier film layer is partially crosslinked. For this purpose, the barrier film may have been prepared from a coating composition comprising a crosslinker. A crosslinker is in this context understood to be a component bearing reactive groups that can react with the hydroxyl and/or carboxyl groups on the HBPEA. With partially crosslinked is in this context understood that at least part of the hydroxyl and/or carboxyl groups

on the HBPEA is retained in the barrier coating. The advantage of the partial crosslinked barrier film layer is that the resistance to humid conditions is enhanced.

Suitable crosslinkers are, for example, polyisocyanates, preferably di- and tri-isocyanates, epoxies, preferably di- and tri-functional epoxies, polycarboxylates and polyanhydrides as well as melamine derivatives, for example hexamethoxymethylmelamine (HMMM).

Other components that can be comprised in the barrier film layer according to the invention are stabilisers, hydrophobicity imparting agents and inorganic fillers such as talcum, mica, kaolin and layered inorganic materials. Examples of stabilizers are UV-absorbers and anti-oxidants. Examples of hydrophobicity imparting agents are waxes and paraffins.

Preferably, the barrier film layer comprises a layered inorganic material. The advantage is that the barrier properties are enhanced.

A layered inorganic material is in the context of this invention understood to be a material consisting of plate-like particles with a high aspect ratio. Such layered inorganic materials are also known as 'nano-filler'. The aspect ratio of a particle is understood to be the ratio between the largest and smallest dimension of the particle. More in particular, the aspect ratio of a plate-like particle is the ratio of the average diameter and the average thickness of the particle. Preferably, the barrier film layer comprises a layered inorganic material composed of anisotropic particles with a high aspect ratio, said aspect ratio lying between 5 and 10,000, preferably between 10 and 10,000, more preferably between 100 and 10,000. The advantage of a higher aspect ratio is that less layered inorganic material is needed to obtain the same level of barrier properties.

Suitable layered inorganic materials consist of plates with an average aspect ratio of between 5 and 10,000. The plates then have an average thickness of about 2.5 nm or less, and a maximum thickness of 10 nm, preferably between about 0.4 nm and about 2.5 nm, more preferably between about 0.4 nm and about 2 nm. The average length of the plates is preferably from about 2 nm to 1,000 nm. More preferably, the average diameter of the plates is below 500 nm and at least 95 weight % of the individual particles have a length of at most 1000 nm. The advantage is that barrier film can have a high content of layered inorganic material and can still be used for applications requiring transparency.

Examples of suitable layered inorganic materials are phyllosilicates, for example smectic clay minerals, vermiculite clay minerals and micas, and synthetic micas. Examples of suitable smectic clay minerals are montmorillonite, nontronite, beidellite, volkonskoite, hectorite, stevensite, pyroysite, saponite, sauconite, magadiite, bentonite and kenyaite. Preferably montmorillonite is chosen.

The amount of inorganic layered material may be freely chosen; the amount will depend on for example the desired properties of the barrier film layer and on the degree of delamination of the nano-filler and the degree of dispersion of the nano-filler in the barrier film layer. In the context of this application, the inorganic layered material or 'nano-filler' is understood to be both the filler as commercially available in an aggregated form and the filler in a deaggregated and delaminated form, as is to be found in the barrier film layer. The inorganic layered material has either not been pretreated or modified or it has been pretreated or modified, for example to promote delamination. In the event of complete dispersion and delamination the amount of inorganic layered material is preferably 0.1 - 20 weight %, relative to the weight of the polymer composition.

The invention also relates to a coating composition comprising a polymer composition as described in claim 1.

The coating composition can be used to prepare a barrier film layer with the advantageous properties according to the invention. The coating composition is also advantageously applied for the preparation of an adhesive film layer in multi-layer packaging films having good barrier properties.

The coating composition may also comprise other components. Suitable other components are components chosen from the group of solvents, crosslinkers, neutralizing agents and inorganic layered materials

Suitable solvents are water and organic solvents. The advantage is that the coating composition can be applied in conventional liquid coating processes and that only a low amount of water and/or organic solvent is needed to attain a low viscous coating composition allowing for a better processability and faster running machines. Preferably, the coating composition comprises water as the liquid component. The advantage is that water is environmentally friendlier.

In another preferred embodiment, the coating does not comprise a solvent. This has the advantage that no solvent has to be evaporated. The coating may be applied, for example as a melt or as a powder coating.

Crosslinkers are advantageously applied to improve the water resistance of the barrier film layer prepared from the coating composition.

The coating composition may advantageously comprise a layered inorganic material, since this results in a barrier film layer with improved barrier properties.

The coating composition comprising a polymer composition with carboxyl functional groups advantageously comprises an evaporizable neutralizing agent for the carboxylic groups. After application, the coating can be physically dried by evaporation of the neutralizing agent. The advantage is that the polymer composition attains improved solubility

in water, while the resulting barrier film layer has improved resistance to water and humid conditions.

Suitable evaporizable neutralizing agents are, for example, low Mw alkyl amines, such as trimethylamine and triethylamine, and ammonia. Preferably, the evaporizable neutralizing agent is ammonia.

The invention also relates to the use of the coating composition according to the invention in a process for preparing a barrier film layer. With the use according to the invention, a barrier film layer having the advantageous properties described above is obtained.

In the process, the coating may be applied by any suitable conventional coating technique. Suitable methods are, for example, brushing, spraying, dipping and calandering.

Drying of the applied coating composition may be done chemically or physically. Chemical drying is understood to involve chemical reaction of the hydroxyl and/or carboxyl functional groups. Physical drying is understood to be a film forming process that does not involve chemical reactions or at least not in an essential amount.

In a preferred embodiment, the applied coating composition is physically dried. More preferably, the coating composition is applied as a solution of the polymer composition in a solvent and physically dried by evaporation of the solvent. The advantage of the process according to the invention is that only a low amount of solvent is needed to attain a low viscous coating composition, which allows for a better processability and faster running machines.

Also preferred is the embodiment, wherein the coating composition is applied as a melt and then physically dried by cooling. This has the advantage that no solvent has to be evaporated. Suitably, the coating composition is applied by a curtain coating process, by a calander coating process, or extruded and laminated contiguously to a substrate.

A further preferred embodiment is the process, wherein the coating composition is applied as a powder and physically dried by melting and cooling. The advantage is that no solvent has to be evaporated and that the coating can be applied to articles with complex surfaces. Suitably, the coating composition is applied by conventional powder coating equipment, for example electrostatic spraying and fluidized bed coating processes.

Chemical drying is typically realized by crosslinking the polymer composition with a crosslinker. In a preferred embodiment of the process according the invention, the polymer composition comprises a crosslinker. In a more preferred embodiment, the combined hydroxyl and carboxyl value of the polymer composition is at least 40 mg KOH/g, relative to the weight of the polymer composition, and at least 50% of the hydroxyl and/or carboxyl functional groups are retained after the drying step. The advantage is that a barrier film layer is obtained with increased resistance to water and humid conditions.

The invention also relates to a substrate bearing a barrier film layer according to the invention. An advantage of a substrate bearing a barrier film layer according to the invention is that it has acceptable printability.

Suitable substrates are, for example, polymers, metal, fabric, wood and paper. Preferably, the substrate is a polymer, more preferably an apolar polymer. The advantage is that the barrier film layer has better adhesion to apolar substrates compared to P(E)VA containing barrier films not comprising a HBPEA. Suitable polymers are, for example, polyamides, polyesters, polycarbonates, polyethylenes, polypropylenes and polystyrenes.

The invention also relates to an article comprising a substrate coated with a coating composition according to the invention. Suitable articles are flexible displays for LED systems and multi-layer packaging films.

The invention in particular relates to a multi-layer packaging film with an adhesive film layer comprising a polymer composition according to the invention.

The following non-limiting Examples and Comparative Experiments further elucidate the invention.

Materials

| | |
|---|---|
| Gohsenol GL-03 | polyvinyl alcohol (PVA) (ex Nippon Gohsei): polyvinyl acetate derivative with a saponification degree of 86,5-89% and a viscosity of 3.0-3.7 mPa.s; theoretical hydroxyl value 1078 mgr KOH/gr |
| Macrolon | Polycarbonate foil containing titanium dioxide (ex Bayer), thickness 295 µm. |
| HBPEAs | HBPEAs were prepared using the method described in WO-A-99/16810, WO-A-00/68388 and WO-A-00/56804. The types and amounts of the constituent components were varied. The molar ratios of the compounds from which the HBPEA are formed are given in Table 1a. These ratios also determine, through the stoichiometry, the number average molar mass of the resulting HBPEA. |

Table 1

| Composition of the HBPEAs | | | | | | | |
|---|---|---|---|---|---|---|---|
| HBPEA | molar ratio | | | | | H+C value | |
| | DiPA | SAnh | HHAnh | PAnh | LA | OH | COOH |
| 81200 | 1 | 0.83 | | | | 374 | |
| SL 1410 | 1 | 0.83 | | | 0.13 | 289 | |
| H SC 1540 N | 1 | 0.13 | 0.83 | | | 148 | 98 |
| PL1510 | 1 | | | 0.83 | 0.13 | 247 | |
| **DiPA** = diisopropanolamine; **SAnh** = succinic anhydride; **HHAnh** = hexahydrophthalic anhydride; **PAnh** = phthalic anhydride; **LA** = lauric acid. **H+C Value** = theoretical values for hydroxyl (OH) and carboxyl (COOH) functional groups (in mgr KOH/g HBPEA) | | | | | | | |

Preparation of Coating compositions

Example I: 53.2 g S1200 (50% dissolved in water) was mixed with 2.67 g Gohsenol 03 (PVOH) (30% dissolved in water) this mixture was further diluted to a 14.5% solution in water (133.1 g water was added).
Example II: S1200 was diluted to a 30% solution in water
Example III: SL1410 was diluted to a 40% solution in water
Example IV: H SC 1540 N was first neutralized with a 28.0-30.0% ammonia solution in water and than further diluted to a 30% solution in water
Example V: PL1510 was diluted to a 14% solution in ethanol

Preparation of barrier film layers on polycarbonate substrate

The coating compositions were applied with a wire bar coater. Example I and V were coated with a wire bar of 200 µm and dried for 10 min. in an oven at 120°C. Example II, III and IV were applied with a 50 µm wire bar and dried for 10 min in an oven at 120°C.

Oxygen permeability tests

Oxygen permeability tests were performed on a Mocon Oxtran 200H instrument according ASTM D3985 at 0% relative humidity and 23°C. A 295 µm thick polycarbonate foil containing titanium dioxide, Macrolon (ex Bayer) was coated with a 15-30 µm thick HBPEA film. The samples were placed in the instrument. After one hour of preconditioning the permeability test was started. The measurements were performed, with an examination time of 30 min. The instrument is able to measure an internal zero value as a calibration tool. This oxygen permeability test contained 37 measurements that are called cycles. These measurement were done without an individual zero, therefore a re-zero period of 5 cycles was adjusted (every 5 measurements a zero value was determined). After ca. 8 h steady state conditions were reached the oxygen permeability value were taken with a total measure time of 19 h average.
Thus the overall oxygen permeability was measured. The results are presented in Table II.

Comparative Experiment A

A comparative experiment was performed with a polycarbonate foil coated with a polyvinylacetate barrier film layer instead of a HBPEA containing barrier film layer. First a coating composition of 30% Gohsenol 03 in water was prepared. The coating composition was applied with a 50 µm wire bar and dried for 10 min. in an oven at 120°C. The oxygen permeability test was performed analogously to the measurements for the HBPEA coated polycarbonate foils. The resulting overall oxygen permeability is collected in Table II.

Comparative Experiment B

A blanc experiment for the oxygen permeability test was performed with a polycarbonate foil without a coating, analogously to the measurements for the HBPEA coated polycarbonate foils. The measured oxygen permeability is collected in Table II.

Table II: results of the oxygen permeability tests

| Experiments | Barrier film layer composition | Total thickness $(T_1+T_2)$ $T_{tot}$ (μm) | Barrier film layer thickness $T_2$ (μm) | Measured total $O_2$ perm $P_{tot}$ $(cm^3/(m^2.dag.atm))$ | Calculated $O_2$ perm $P_2$ $(cm^3.mm/(m^2.dag.atm))$ |
|---|---|---|---|---|---|
| Example I | S1200 + 3% PVOH | 324 | 29 | 15 | 1,4 |
| Example II | S1200 | 310 | 15 | 45 | 2,4 |
| Example IIII | SL1410 | 315 | 20 | 154 | 14,1 |
| Example IV | H SC 1540 N | 310 | 15 | 280 | 30,9 |
| Example V | PL1510 | 323 | 28 | 267 | 47,7 |
| Comparative Experiment A | PVOH | 310 | 15 | 163 | 11,7 |
| Comparative Experiment B: | Macrolon foil; no barrier coating | $T_1$ = | 295 | μm | |
| | | $P_1$ = | 473 | $cm^3/(m^2.dag.atm)$ | |

From the results the oxygen permeability of the barrier film layers was calculated with help of the formula (2)

$$\frac{T_{total}}{P_{total}} = \frac{T_1}{P_1} + \frac{T_2}{P_2} \qquad (2)$$

wherein:

$T_{total}$ = thickness of polycarbonate foil + barrier layer film, $T_1$ = thickness of polycarbonate foil, $T_2$ = thickness of barrier layer film, $T_{total}$ = the measured permeability of combined polycarbonate foil + barrier layer film, $P_1$ = measured permeability of polycarbonate foil, and $P_2$ = calculated permeability of barrier layer film.

The results for the calculated oxygen permeability of the barrier film layers are collected in Table II.

The results show that good barrier properties are obtained with barrier film layers based on pure HBPEA. The permeability of these barrier film layers are better than polycarbonate by a factor of about 10 or more, and are comparable to the polyvinylalcohol barrier film layer. In particular good results are obtained with the barrier film layer of S1200, showing a permeability that is a factor 200 better than the polycarbonate layer and which is even lower than PVA. Moreover, Example I, with S1200 comprising 3% Gohsenol 03, surprisingly shows a permeability that is even lower, being a factor 10 better compared to the polyvinylalcohol barrier film barrier in the performed tests, thus showing a synergistic effect in barrier properties between polyvinylalcohol and the HBPEA.

## Claims

1. Barrier film layer comprising a polymer composition, **characterized in that** the polymer composition comprises

   a. an amount of a highly branched polyesteramide (HBPEA), and
   b. optionally, an amount of polyvinylalcohol or a derivative thereof (P(E)VA),

   wherein the sum of the amount of the HBPEA and the amount of the P(E)VA is at least 30 weight %, calculated relative to the weight of the polymer composition, and wherein the amount of the HBPEA is at least 5 weight %, calculated relative to the weight of the polymer composition, and wherein the polymer composition comprises hydroxyl and/or carboxyl functional groups with a combined hydroxyl and carboxyl value of at least 20 mg KOH/g calculated relative to the polymer composition.

2. Barrier film layer according to claim 1, wherein the HBPEA has a molecular weight of at least 800 g/mol.

3. Barrier film layer according to claim 1 or 2, wherein the HBPEA has a combined hydroxyl and carboxyl value of at least 50 mg KOH/g, calculated relative to the weight of the HBPEA.

4. Barrier film layer according to any of claims 1 to 3, wherein the polymer composition consists of 50 to 95 weight % P(E)VA, 5-40 weight % HBPEA and 0-20 weight % other polymeric components, the weight % calculated relative the weight of the polymer composition.

5. Barrier film layer according to any of claims 1 to 3, wherein the polymer composition consists of 0-50 weight % P(E)VA, 50-100 weight % HBPEA and 0-25 weight % other polymeric components.

6. Barrier film layer according to any of claims 1 to 5, wherein the polymer composition is partially crosslinked.

7. Barrier film layer according to any of claims 1 to 6, wherein the barrier film layer comprises a layered inorganic material.

8. Coating composition comprising a polymeric composition, **characterized in that** the coating composition comprises a polymer composition as described in claim 1.

9. Coating composition according to claim 8, wherein the coating composition further comprises at least a component chosen from the group of solvents, crosslinkers, neutralizing agents and inorganic layered materials.

10. Coating composition according to claim 8, wherein the coating composition is a solution, a powder or a melt.

11. Use of the coating composition according to any of claims 8 - 10 in a process for preparing a barrier film layer.

12. Substrate bearing a barrier film layer according to any of claims 1 to 7.

13. Substrate according to claim 12, wherein the substrate is chosen from the group of polyethylene and copolymers thereof and polypropylene and copolymers thereof.

14. Article comprising a substrate according to claim 12 or 13.

15. Article according claim 14, wherein the article is a flexible display for a LED system.

16. Multi-layer packaging film with an adhesive film layer comprising a polymer composition according to any of claims 1-7.

European Patent Office

# EUROPEAN SEARCH REPORT

Application Number
EP 02 07 7301

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | WO 99 16810 A (STANSSENS DIRK ARMAND WIM ;DSM NV (NL); RIETBERG JOHAN (NL); BENTH) 8 April 1999 (1999-04-08) * claims 1,17-21 * --- | 8-10 | C08L77/12 C09D177/12 //(C08L77/12, C08L29:04), (C09D177/12, C09D29:04) |
| D,X | WO 00 56804 A (DSM NV ;BENTHEM RUDOLFUS ANTONIUS THEO (NL)) 28 September 2000 (2000-09-28) * claims 1,10-14; example 1 * --- | 8-10 | |
| A | US 4 501 879 A (BARBEE ROBERT B ET AL) 26 February 1985 (1985-02-26) * claims 1-40 * --- | 1-16 | |
| A | US 4 855 397 A (BARBEE ROBERT B ET AL) 8 August 1989 (1989-08-08) * column 2, line 64 - column 3, line 24; claims 1-5 * ----- | 1-16 | |
| | | | TECHNICAL FIELDS SEARCHED (Int.Cl.7) |
| | | | C08L C09D |

The present search report has been drawn up for all claims

| Place of search | Date of completion of the search | Examiner |
|---|---|---|
| MUNICH | 22 October 2002 | Hoffmann, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 07 7301

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2002

| Patent document cited in search report | Publication date | Patent family member(s) | Publication date |
|---|---|---|---|
| WO 9916810 A | 08-04-1999 | NL 1007186 C2 | 07-04-1999 |
| | | AU 746623 B2 | 02-05-2002 |
| | | AU 9190298 A | 23-04-1999 |
| | | CA 2305364 A1 | 08-04-1999 |
| | | CN 1281478 T | 24-01-2001 |
| | | EP 1036106 A1 | 20-09-2000 |
| | | JP 2001518539 T | 16-10-2001 |
| | | WO 9916810 A1 | 08-04-1999 |
| | | US 6392006 B1 | 21-05-2002 |
| | | US 2002055609 A1 | 09-05-2002 |
| WO 0056804 A | 28-09-2000 | AU 3464800 A | 09-10-2000 |
| | | CN 1351624 T | 29-05-2002 |
| | | EP 1171509 A1 | 16-01-2002 |
| | | WO 0056804 A1 | 28-09-2000 |
| | | US 2002035236 A1 | 21-03-2002 |
| US 4501879 A | 26-02-1985 | BR 8506057 A | 25-03-1986 |
| | | CA 1225190 A1 | 04-08-1987 |
| | | DE 3562778 D1 | 23-06-1988 |
| | | EP 0176556 A1 | 09-04-1986 |
| | | JP 61501515 T | 24-07-1986 |
| | | WO 8504412 A1 | 10-10-1985 |
| | | ZA 8502278 A | 27-11-1985 |
| US 4855397 A | 08-08-1989 | NONE | |

EPO FORM P0459

For more details about this annex : see Official Journal of the European Patent Office, No. 12/82